# EUROPEAN PATENT SPECIFICATION

(11) **EP 2 434 055 B1**
(45) Date of publication and mention of the grant of the patent: **05.06.2013**
(21) Application number: 11007521.5
(22) Date of filing: 15.09.2011
(51) Int. Cl.: E01F 8/00, C08J 5/04, C08J 5/10, C08K 5/549, C08K 5/5419

(54) **The fibre-reinforced acrylic panel and the process for its manufacture**
Faserverstärkte Acrylplatte und Verfahren zu deren Herstellung
Panneau acrylique renforcé à fibres et son procédé de fabrication

(30) Priority: 23.09.2010 SI 201000294
(43) Date of publication of application: 28.03.2012
(73) Proprietor: Akripol proizvodnja in predelava polimerov, d.d., 8210 Trebnje (SI)
(72) Inventor: Japelj, Bostjan, Dr., 8000 Novo Mesto (SI); Brulc, Petra, Dr., 1230 Domzale (SI); Popelar, Matjaz, 1270 Litija (SI); Bundersek, Alenka, 8297 Sentjanz (SI); Bitenc, Blaz, 1000 Ljubjana (SI)
(74) Representative: Marn, Jure

(56) References cited:
- US-A- 5 040 352
- US-A1- 2005 211 946
- US-B1- 6 412 597
- ELDA MARKOVIC ET AL: "Synthesis of POSS-Methyl Methacrylate-Based Cross-Linked Hybrid Materials", MACROMOLECULES, vol. 41, no. 5, 8 February 2008 (2008-02-08), pages 1685-1692, XP55014262, ISSN: 0024-9297, DOI: 10.1021/ma702103z
- JUN XIAO ET AL: "Copolymers of MMA and polyhedral oligosilsesquioxanes (POSS) with thermal property enhancements", POLYMER PREPRINTS, vol. 43, no. 1, 2002, pages 504-505, XP55014278, ISSN: 0032-3934
- LICHTENHAN J D ET AL: "THERMOPLASTIC HYBRID MATERIALS: POLYHEDRAL OLIGOMERIC SILSESQUIOXANE (POSS) REAGENTS, LINEAR POLYMERS, AND BLENDS", MATERIALS RESEARCH SOCIETY SYMPOSIUM PROCEEDINGS; [MATERIALS RESEARCH SOCIETY SYMPOSIUM PROCEEDINGS], MATERIALS RESEARCH SOCIETY, PITTSBURG, PA; US, vol. 435, 1996, pages 3-11, XP008014654, ISBN: 978-1-55899-828-5
- LICHTENHAN J D ET AL: "LINEAR HYBRID POLYMER BUILDING BLOCKS: METHACRYLATE-FUNCTIONALIZED POLYHEDRAL OLIGOMERIC SILSESQUIOXANE MONOMERS AND POLYMERS", MACROMOLECULES, AMERICAN CHEMICAL SOCIETY, WASHINGTON, DC; US, vol. 28, no. 24, 20 November 1995 (1995-11-20), pages 8435-8437, XP000539446, ISSN: 0024-9297, DOI: 10.1021/MA00128A067

## Description

### Technical problem

The technical problem solved by the invention is the production of sound insulation acrylic panels designed for highway transparent sound barriers which would be resistant to impacts.

### State of the art

Sound insulation panels based on acrylic glass with included reinforcement monofilament threads and their manufacture have already been described in EP 0 407 852 A2. This document describes panels which have, according to their cross-section, an approximately central placement of polyamide monofilament threads or a two-dimensional mesh fabric made out of them. These panels are manufactured by tightening the monofilament threads with a diameter from 0.2 to 2 mm through a mould, and then pouring a prepolymer based on acrylates into it. On the basis of one execution, the threads are arranged in a parallel way with a distance from 8 to 100 mm between threads. However, the threads can be arranged in the form of a grid (with threads arranged at an angle of 90°).

Elda Markovic, Stephen Clarke, Janis Matisons , and George P. Simon in their work Synthesis of POSS-Methyl Methacrylate-Based Cross-Linked Hybrid Materials as published in Macromolecules, 2008, 41 (5), pp 1685-1692 discussed a series of POSS^{(PEG)n-2-6} macromonomers which were functionalized by reaction with mcthacryloyl chloride and then polymerized with methyl methacrylate to produce a series of hybrid materials where the amounts of POSS^{(PEG)n-2-6} used as cross-linkers varied from 0.1 to 0.5 mol %. Thermal investigations using TGA and DSC techniques revealed that both POSS concentrations and PEG chain length play important roles in defining structure-property relationships. Incorporation of POSS always increased thermal stability. Although the POSS is a bulky and multifunctional cross-linker, glass transitions did not always increase. In some instances bulkiness of the group created free volume and chain separation, which led to a reduction in the glass transition temperature.

The document EP 0 826 832 A2 describes sound insulation panels with anti-fragmentation properties made of acrylic polymers and with included monofilament threads which are not placed centrally according to the cross-section of the panel. The threads are positioned within a thickness range between 20 and 35% of the total thickness of the plate, towards the surface opposite to that which is exposed to vehicles or impacts. It follows that the position of fibres is important to decide which surface of the panel is exposed to vehicles and impact. Therefore, the panel can be defined as "bilateral" according to its mechanical properties - one side of the panel is basically more fortified and consequently more resistant to mechanical stress than the other side. The document also describes that the monofilament threads have a diameter between 0.1 and 4 mm, preferably between 2 and 3 mm. Threads or tapes made of them are placed within a distance of 10 to 100 mm. Also in this case we speak of the planar structure of embedded threads (threads are positioned in one plane), i.e. tightened threads, grid or tapes. Monofilament threads are tightened through a mould, either in a parallel way or in the form of tapes or a grid. In the case of tapes, the latter have a width of 5-25 mm and a thickness equal to that of monofilament threads of which they are made. It is not described, how the threads are embedded into the panel or in what way an appropriate position of the embedded threads is achieved during the procedure of the panel production or at the polymerization of polymethylmethacrylate (hereinafter referred to as "PMMA" to the needs of this application).

The document EP 1 119 662 B1 (WO 00/20690 A1) also describes sound insulating panels made of acrylic glass, which have monofilament threads included in the acrylic matrix in order to improve the anti-fragmentation properties. The maximum variation is 1 mm or more, preferably 5 mm from an imaginary straight line that runs through the ends of this thread. The polyamide or polypropylene threads may be inserted into the panel, in a direction transverse or parallel to the plane of the panel. Threads may be included so that they are parallel and run in one direction, or they can run parallel to each other in several directions. The diameter of the used threads is 0.2 to 2.0 mm and the distance between adjacent threads can range between 8 and 100 mm. One execution variant is that threads are inserted so that a curvy arrangement of the threads is visible in the cross-section. Even in this case the threads are arranged in a parallel way and basically planar. The examples show that even in this process of panel production, the threads are embedded in the panel so that they are tightened through the mould.

The document EP 1936 035 describes panels on the basis of polymethylmethacrylate (i.e. acrylic glass) with included reinforcement polymer monofilament fibres in the form of three-dimensional intertwined fibres, where the reinforcement polymer monofilament fibres are included in the PMMA matrix so that the fibres in it are oriented in all directions and arranged to look even in all directions, so that they appear to be evenly distributed over the whole cross-section of the panel or over its entire volume. These panels have great sound insulation, anti-shock and anti-fragmentation properties due to the embedded reinforcement polymer monofilament fibres (reinforcement grid).

### Description of the new solution

The fibre-reinforced acrylic panel and the process for its manufacture resolve the above described technical problem by integrating polyhedral oligomeric silsesquioxane (POSS) nanoparticles in the PMMA matrix prior to polymerization.

For the production of nanofillers the sol-gel process was used, which enables the preparation of ceramic and glass-like materials at room temperature. The sol-gel grid is formed through the hydrolysis and condensation reactions. Methacryloxy functionalized POSS were prepared from trialkoxysilanes (with three alkoxide groups) (T silanes), functionalized with the methacryloxypropyl group. In the execution example we used a 3-(trimethoxysilyl) propylmethacrylate (MAPTMS) as a basic precursor, mixed with the appropriate proportion of differently functionalized trialkoxysilanes of the type R¹Si(OR²)₃, where R¹ and R² represent an organic group. After the sol-gel process, polyhedral oligomeric silsesquioxanes were prepared out of them.

### Example 1:

### POSS synthesis in the laboratory.

25 g MAPTMS is dissolved in the solvent 100 g THF, while constantly mixing the solution at room temperature, an excess amount of catalyst and an aqueous solution of NH₄F are added to the solution, which is then stirred for several days (5-7 days). Then the solvent, excess water and catalyst are removed from sol. The residue from the distillation is a colourless to slightly yellow viscous liquid, a mixture of condensed oligomeric silsesquioxanes, connected into different polyhedral structures T₇(OH)₃, T₈, T₁₀, T₁₂, etc.. The structure of the mixture was determined with FTIR, ²⁹Si NMR, XRD, XPS spectroscopy and SEM shots.

For the production of the panel on the basis of the invention, POSS nanoparticles with a content of 1-10%, preferably 8.5% are added to the methylmethacrylate prepolymer (MMA) during constant stirring in the first place. The mixture is stirred for some time (preferably 15 minutes) at room temperature (until the product is homogenous) and then poured into a pre-prepared mould. A grid and pre-tightened monofilaments are already prepared in the mould in which the polymerization is carried out. Polymerization conditions such as temperature and time depend on the desired thickness of the final panel.

### Example 2

### Synthesis of the panel in the production.

Moulds were prepared on the line for the preparation of toughened glass moulds of the approximate thickness of 10 mm and a size of 2120 mm x 2120 mm, PVC seals of the approximate thickness of 19 mm, PA grids and PA monofilaments. We induced the seal along the edge of the lower glass, approximately 30 mm from the edge (the rate may be different) and inserted onto it a three-dimensional tangle of colourless polyamide fibres such as the Enkaspacer from the COLBOND company, so that the tangle basically covered the entire surface of the mould. The tangle had a thickness of 10.5 ± 0.5 mm and a surface of 2040 mm x 2040 mm. The thickness of individual fibres was 0.7 ± 0.07 mm, and the weight of the tangle 300 ± 20 g/m². Two parallel pre-tighten colourless monofilament polyamide fibres of the thickness 1.5 ± 0.15 mm were hung on the upper glass at a distance of 30 ± 3 mm. Both of the partially manufactured parts of the mould were united and pressed together with fixed clamps.

The prepolymer was prepared in a reactor with an approximate volume of 400 1, from around 360 kg of the mixture made of methyl methacrylate monomers (MMA), ethyl acrylate (EA) and commercially available azo initiator. While constantly stirring the mixture, we heated it at an approximate temperature of 93 °C and maintained this temperature for the whole time of the reaction. After some time (after about 10 minutes) at the temperature of the reaction, we cooled the mixture at room temperature while constantly stirring it. We measured the viscosity of the prepolymer according to Ford: Ford viscosity cup ø = 4 mm, volume flow rate of the prepolymer at 20° C was 79 s.

The prepolymer so prepared was poured into a mixing bowl. While constantly stirring it we added 8.5% of basically polyhedral oligomeric silsesquioxanes (POSS), commercially available azo or redox initiators, and other commercial additives.

In the dosing line, the well mixed mixture was poured into the prepared moulds, opened on one side. We placed the moulds onto the racks more than one at a time and put them into a water basin with a temperature of 54 °C in which polymerization was carried out (for approximately 10 hours).

We then transferred them into an air oven, where the post-polymerization was carried out for approximately 3 hours according to the temperature programme. When the reaction was finished, the moulds were cooled at room temperature and dismantled. The panels reinforced with a polyamide grid and polyamide monofilaments were then taken out of the moulds. The thickness of the manufactured panel was 15 mm.

The panels were used for testing according to the standard EN 1794-2, Annex B, a test with a weight of 400kg. The panel corresponded to the prescribed value from the standard and was ranked in the highest category 6.

Methacryloxy functionalized POSS nanoparticles used on the basis of the invention have the characteristics of classic cross-links because they are functionalized with a methacrylate group which entangles the polymer during the polymerization process. Simultaneously we enter siloxane structures, i.e. glass nanoparticles into the acrylic structure. By planning the functionalization of POSS structures, i.e. using differently functionalized trialkoxysilanes of the type R¹Si(OR²)₃, where R¹ and R² represent an organic group, the POSS nanoparticles were modified during the synthesis. In this way organic groups were entered into the acrylic glass and they influenced the structure of the acrylic material. With differently functionalized POSS we had an influence on the degree of crystallinity in the amorphous acryl or on the folding /interrelating distance between polymer chains. The latter is reflected in the improvement of dynamic mechanical properties, especially toughness.

Beside that the acryl panel can be manufactured with reinforcement threads (otherwise known from the prior art in EP 1 119 662) as well as with the reinforcement grid (otherwise known from the prior art, EP 1 936 035)

The combination of both is new and has an appropriate inventive level since the synergistic effect of both reinforcements has not yet been researched. The surprising technical effect is reflected in the fact that the reinforcement threads are strong enough to prevent bigger broken parts of acrylic panels from falling to the ground. The reinforcement grid is, on the other hand, woven densely enough to prevent small pieces of broken acryl from falling to the ground.

Reinforcement tapes can be added in addition or instead of reinforcement threads.

Monofilament threads, preferably polyamide or polypropylene threads, integrated in the acrylic matrix, can be inserted in a basically transverse or parallel way according to the plane of the panel. Threads may be included so that they are parallel and run in one direction, or they can run parallel to each other in several directions, and may intersect in the same plane or in various planes. The diameter of the used threads is 0.2 to 2.0 mm and the distance between adjacent threads can range between 8 and 100 mm. One execution variant is that threads are inserted so that a curvy arrangement of the threads is visible in the cross-section. Even in this case the threads are arranged in a parallel way and basically planar.

In addition to these threads, polymer monofilament fibres in the form of three-dimensional intertwined fibres are included in the PMMA matrix, where the reinforcement polymer monofilament fibres are included in the PMMA matrix so that the fibres in it are oriented in all directions and arranged to look even in all directions so that they appeared to be evenly distributed over the whole cross-section of the panel or over its entire volume.

A comparative test of the panels based on the invention and of the panels that are already established on the market, showed that the panels on the basis of the invention are ranked in the category 6 when tested with a 400kg weight in accordance with the standard EN 1794-2, Annex B, while the compared panels are ranked in a lower category classification.

Below, the subject of the invention is additionally described through sketches, which form part of this patent application and represent:
- sketch 1 an acrylic panel 1 without additives;
- sketch 2 acrylic panel 1 with the addition of reinforcement threads 2 in one predominant direction;
- sketch 3 acrylic panel 1 with the addition of reinforcement threads 2 and 3 in two predominant directions;
- sketch 4 acrylic panel 1 with the addition of reinforcement threads 2 in one predominant direction and a reinforcement grid 4;
- sketch 5 acrylic panel 1 with the addition of reinforcement threads 2 and 3 in two predominant directions and a reinforcement grid 4.

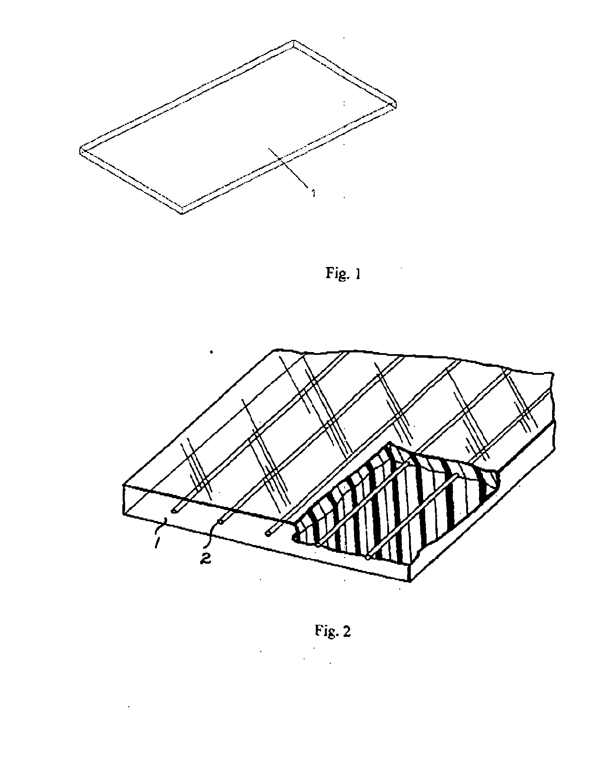

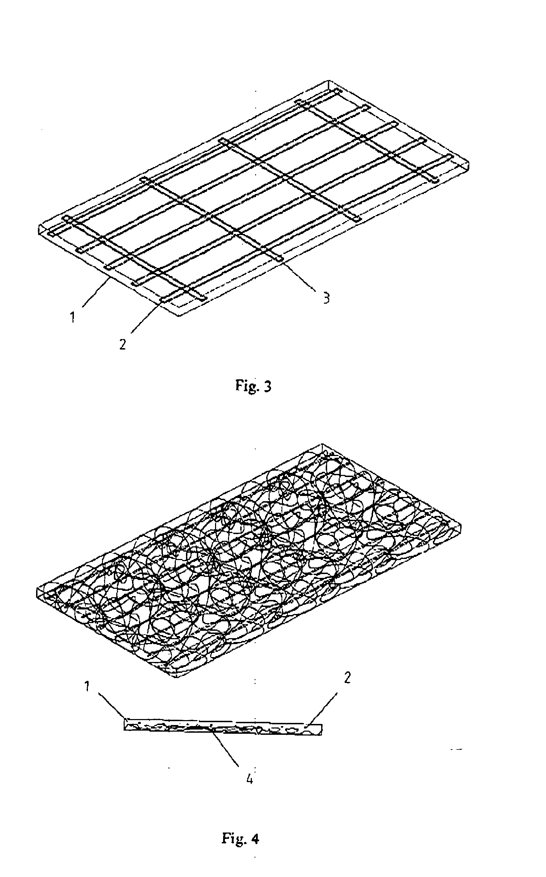

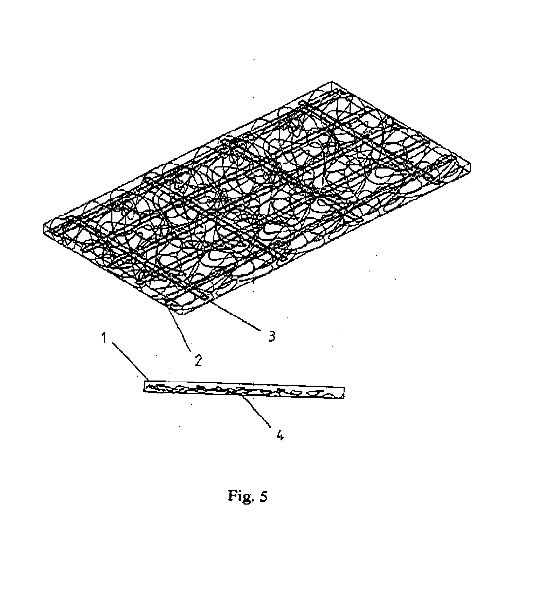

## Claims

1. A process for the preparation of fibre-reinforced acrylic panels, especially for sound insulation, using methacryloxy functionalized polyhedral oligomeric silsesquioxane (POSS) nanoparticles, wherein said POSS nanoparticles are integrated into PMMA matrix prior to polymerization ; wherein the methacryloxy functionalized (POSS) nanoparticle are formed from the sol-gel process of functionalized trialkoxysilanes (with three alkoxide groups) (T silanes) at room temperature, where the sol-gel grid is formed through hydrolysis and condensation reactions.

2. The process according to claim 1, **characterized in that** the 3-(trimethoxysilyl) propylmethacrylate (MAPTMS) is used as a basic precursor mixed with the appropriate proportion of trialkoxysilanes of the type R¹Si(OR²)₃, where R¹ and R² represent an organic group which results in the preparation of polyhedral oligomeric silsesquioxanes with the sol-gel process.

3. The process according to any preceding claim, **characterized in that** for the manufacture of the panel, POSS nanoparticles with a content of 1-10%, preferably 8.5% are added to the methylmethacrylate prepolymer (MMA) during constant stirring in the first place the mixture is then stirred at room temperature until the product is basically homogenous and is then poured into a pre-prepared mould.

4. The process according to claim 3, **characterized in that** the mixture is poured into a pre-prepared mould with a grid and pre-tightened monofilaments in it. Polymerization is carried out in the mould.

5. The process according to claim 4, **characterized in that** the moulds are prepared on the line for the preparation of toughened glass moulds, PVC seals, PA grids and PA monofilaments, and that the seal is induced along the edge of the lower glass and a three-dimensional tangle of colourless polyamide fibres is inserted onto it, so that the tangle basically covers the entire surface of the mould, and that two parallel pre-tightened colourless monofilament polyamide fibres are hung on the upper glass, and that prepolymer is prepared in a reactor from the mixture of methyl methacrylate monomers (MMA), ethyl acrylate (EA) and the initiator, where the mixture is heated to the temperature of the reaction and then cooled, and then the prepolymer is poured into a mixing bowl and polyhedral oligomeric silsesquioxanes (POSS) are added to it.

6. The process according to claim 5, **characterized in that** the toughened glass is of the approximate thickness of 10 mm, that the PVC seals are of the approximate thickness of 19 mm, that the seals are induced approximately 30 mm from the edge, that the thickness of individual fibres is 0.7 ± 0.07 mm, that the weight of the tangle is 300 ± 20 g/m2, that two parallel pre-tightened colourless monofilament polyamide fibres of the thickness 1.5 ± 0.15 mm are hung on the upper glass at a distance of 30 ± 3 mm, that the mixture of methyl methacrylate monomers (MMA), ethyl acrylate (EA) and azo initiators is heated at the temperature of 93 °C. the cooled prepolymer is then poured into a mixing bowl and while constantly stirring it we add to it 8.5% of basically polyhedral oligomeric silsesquioxanes (POSS), azo or redox initiators; the well mixed mixture is poured into the prepared moulds, opened on one side, which are put into a water basin with a temperature of 54 °C for about 10 hours; the moulds are then transferred into an air oven, where the post-polymerization is carried out for approximately 3 hours; after the reaction the moulds are cooled.

7. A fibre-reinforced acrylic panel, especially for sound insulation, **characterized in that** polyhedral oligomeric silsesquioxane (POSS) nanoparticles are integrated in the PMMA matrix prior to polymerization.

8. The panel according to claim 7, **characterized in that** monofilament threads, preferably polyamide or polypropylene threads, are integrated in the PMMA matrix.

9. The panel according to claims 7 and 8, **characterized in that** the threads are basically parallel to each other and run in one direction.

10. The panel according to any claim from 7 to 9, **characterized in that** the threads run parallel to each other in at least two directions.

11. The panel according to any claim from 7 to 10, **characterized in that** the threads intersect in the same plane or in various planes.

12. The panel according to any claim from 7 to 11, **characterized in that** the diameter of the used threads is 0.2 to 2.0 mm and that the distance between adjacent threads can range between 8 and 100 mm.

13. The panel according to any claim from 7 to 12, **characterized in that** a curvy arrangement of the threads is visible in the cross-section, where the threads are basically arranged in a parallel and planar way.

14. The panel according to any claim from 7 to 13, **characterized in that** polymer monofilament fibres in the form of three-dimensional intertwined fibres are included in the PMMA matrix, where the reinforcement polymer monofilament fibres are included in the polymethylmethacrylate matrix so that the fibres in it are oriented in all directions and arranged to look even in all directions so that they appear to be evenly distributed over the whole cross-section of the panel or over its entire volume.

15. The panel according to any claim from 7 to 14, **characterized in that** tapes are used instead of threads.

## Patentansprüche

1. Im Verfahren für die Herstellung von Acriylplatten, verstärkt durch Fasern und geeignet vor allem gegen Lärmschutz, werden die Methacryloxy functionalized Polyhedral Oligomeric Silsesquioxanes (POSS) Nanopartikeln gebraucht, wobei die genannten POSS Nanopartikeln in die PMMA Matrix vor der Polymerisation integriert werden; worin die Methacryloxy functionalized POSS Nanortikeln durch das Sol-Gel Verfahren von functionalized Trialkoxysilanen (mit drei alkoxiden Gruppen) (T Silanes) bei der Zimmertemperatur geformt werden, wobei das Sol-Gel Gitter über Reaktionen der Hydrolyse und Kondensation geformt wird.

2. Das Verfahren aus dem Anspruch 1 ist charakterisiert dadurch, dass 3-Trimethoxysilyl Propylmethacrylate (MAPTMS) als Basisprecursor verwendet wird, gemischt mit der entsprechenden Proportion von Trialkoxysilanen des Typs R¹Si(OR²)3, wo R¹ und R² eine organische Gruppe präsentieren, was in der Vorbereitung von Polyhedral Oligomeric Silsesquioxanes mit dem Sol-Gel Prozess resultiert.

3. Das Verfahren aus irgendeinem der vorherigen Ansprüche ist charakterisiert dadurch, dass für die Vorbereitung der Platte die (POSS) Nanopartikeln mit dem inhalt von 1-10% vorzugsweise 8,5% Methylmethacrylate Prepolymer (MMA) während des ständigen Mischens hinzugefügt werden. Weiter wird die Mischung bei der Zimmertemperatur gemischt, bis das Produkt im Grunde homogen wird und dann in die vorher vorbereitete Form eingegossen wird.

4. Das Verfahren aus dem Anspruch 3 ist charakterisiert dadurch, dass die Mischung in die vorher vorbereitete Form mit dem Gitter und vorgesprannten Monofilameten eingegossen wird. Die Polymerisation wird in der Form vollzogen,

5. Das Verfahren aus dem Anspruch 4 ist charakterisiert dadurch, dass die Formen auf der Vorbereitungslinie aus Hartglas, aus PVC Abdichtungen, aus PA Gitter und PA Monofilamenten vorbereitet werden, im Weiteren dadurch, dass die Abdichtung an den Rand des unteren Glases verleitet wird und darauf das dreidimensionale Geflecht von farblosen Polyamidfasern aufgesetzt wird und zwar auf die Weise, dass dieses Geflecht im Grunde die ganze Fläche der Form verdeckt, im Weiteren dadurch, dass auf das obere Glas zwei parallel vorgespannte farblose Monofilament Polyamide Fasern aufgehängt werden und das Präpolymer in dem Reaktor aus einer Mischung von Methyl Methacrylate Monomer (MMA), Ethyl Acrylat (EA) und aus dem Initiator vorbereitet wird, wobei die Mischung bis zu der Temperatur der Reaktion aufgewärmt wird und dann abgekühlt und dann wird das Polymer in den Mischbehälter gegossen und das Polyhedral Oligomeric Silsesquioxanes (POSS) wird hinzugefügt.

6. Das Verfahren aus dem Anspruch 5 ist charakterisiert dadurch, dass das Hartglas ungefähr 10 mm dick ist, dass die PVC Abdichtungen ungefähr 19 mm dick sind und das die Abdichtungen 30 mm vom Rand entfernt sind, dass die Breite der einzelnen Fasern 0,7 ± 0,07 mm beträgt, dass das Gewicht vom Geflecht von 300 ± 20 g/m2 beträgt, dass zwei parallel vorgespannte farblose Monofilament Polyamide Fasern mit einer Breite von 1,5 ± 0,15 mm auf das obere Glas aufgehängt werden auf einer Entfernung 30 ± 3 mm, dass die Mischung aus Methyl Methacrylate Monomer (MMA), Ethyl Acrylat (EA) und aus dem azo Initiator auf die Temperatur von 93 C aufgewärmt wird; das abgekühlte Prepolymer wird in den Mischbehälter eingegossen und ihm werden beim ständigen Mischen im Grunde 8,5% Polyhedral Oligomeric Silsesquioxanes (POSS), azo oder redox Initiator hinzugefügt, die gut vermischte Mischung wird in die vorbereiteten und auf einer Seite geöffneten Formen eingegossen, diese werden dann in das Wasserbecken mit der Temperatur von 54 C für ungefähr 10 Stunden gestellt; die Formen werden dann in einen Luftofen übertragen, wo für ungefähr drei Stunden die Postpolymerisation durchgeführt wird, nach der Reaktion werden die Formen abgekühlt.

7. Acriylplatten, verstärkt durch Fasern und vor allem gegen Lärmschutz geeignet, sind charakterisiert dadurch, dass die Polyhedral Oligomeric Silsesquioxanes (POSS) Nanopartikeln in die PMMA Matrix vor der Polymerisation integriert sind.

8. Die Platte aus dem Anspruch 7 ist charakterisiert dadurch, dass die Monofilament Fäden, vor allem Polyamide oder Polypropylene Fäden, in die PMMA Matrix integriert sind.

9. Die Platte aus den Ansprüchen 7 und 8 ist charakterisiert dadurch, dass die Fäden im Grunde parallel zueinander liegen und in eine Richtung verlaufen.

10. Die Platte aus irgendeinem der Ansprüche von 7 bis 9 ist charakterisiert dadurch, dass die Fäden im Grunde parallel zueinander liegen und mindestens in zwei Richtungen verlaufen.

11. Die Platte aus irgendeinem der Ansprüche von 7 bis 10 ist charakterisiert dadurch, dass die Fäden sich auf der gleichen Ebene oder auf verschiedenen Ebenen kreuzen.

12. Die Platte aus irgendeinem der Ansprüche von 7 bis 11 ist charakterisiert dadurch, dass der Durchmesser von den benutzten Fäden von 0,2 bis 2,0 mm beträgt und dass die Entfernung zwischen den benachbarten Fäden im Bereich von 8 bis 100 mm liegt.

13. Die Platte aus irgendeinem der Ansprüche von 7 bis 12 ist charakterisiert dadurch, dass die wellenformige Anordnung von Fäden im Kreuzschnitt sichtbar ist, wobei die Fäden im Grunde parallel und eben verteilt werden.

14. Die Platte aus irgendeinem der Ansprüche von 7 bis 13 ist charakterisiert dadurch, dass die Polymer Monofilament Fasern in der Form eines dreidimensionalen Geflechts in die PMMA Matrix eingebunden sind, wobei die bestärkten Polymer Monofilament Fasern in Polymethylmethacrylate Matrix auf die Weise eingebunden sind, dass die Fasern drinnen in alle Richtungen orientiert und in alle Richtungen verteilt werden und so scheint es zu sein, dass sie gleichmäßig durch den ganzen Kreuzschnitt der Platte oder in ihrem ganzen Volumen distribuiert werden.

15. Die Platte aus irgendeinem der Ansprüche von 7 bis 14 ist charakterisiert dadurch, dass die Bänder anstelle von Fäden benutzt werden.

## Revendications

1. Un procédé permettant de fabriquer des panneaux renforcés par des fibres acryliques, spécialement conçus pour l'isolation acoustique, en utilisant des nanoparticules de silsesquioxane oligomère polyédrique (POSS) du groupe fonctionnel méthacryloxy, dans lequel lesdites nanoparticules de POSS sont intégrées à la matrice du PMMA avant la polymérisation; dans lequel les nanoparticules de POSS du groupe fonctionnel méthacryloxy sont formées à partir du procédé sol-gel du groupe fonctionnel trialcoxysilanes (avec trois groupes alcoolates) à température ambiante, où la grille de sol-gel est formé par hydrolyse et réactions de condensation.

2. Conformément à la revendication 1, le procédé se **caractérise par le fait que** le 3-(triméthoxysilyl) propylméthacrylate (MAPTMS) est utilisé comme précurseur de base et est mélangé avec une proportion ajustée de trialcoxysilanes de type R¹Si(OR²)₃, où R¹ et R² représentent un groupe organique qui aboutit à la préparation de silsesquioxanes oligomères polyédriques grâce au procédé sol-gel.

3. Conformément aux revendications précédentes, le procédé se **caractérise par le fait que** pour la fabrication du panneau, les nanoparticules de POSS d'une teneur de 1 à 10%, de préférence 8,5% sont, dans un premier tempes, ajoutées au prépolymère méthacrylate de méthyle (MMA) pendant un mouvement constant, le mélange est ensuite agité à température ambiante jusqu'à ce que le produit soit essentiellement homogène, il est ensuite versé dans un moule pré-préparé.

4. Conformément à la revendication 3, le procédé se **caractérise par le fait que** le mélange est versé dans un moule pré-préparé avec à l'intérieur une grille composée de monofilaments pré-tendus. La polymérisation est effectuée dans le moule.

5. Conformément à la revendication 4, le procédé se **caractérise par le fait que** les moules sont préparés sur la ligne de préparation des moules en verre trempé, des joints en PVC, des grilles PA et des monofilaments PA, que le joint est appliqué le along du bord inférieur de la vitre et un enchevêtrement tridimensionnel de fibres de polyamide incolores est inséré au-dessus, de sorte que l'enchevêtrement couvre essentiellement toute la surface du moule, que deux monofilaments de fibres de polyamide incolores pré-tendus et parallèles sont accrochées à la vitre supérieure, que le prépolymère est préparé dans un réacteur à partir du mélange de monomères méthacrylate de méthyle (MMA), d'acrylate d'éthyle (EA) et de l'initiateur, dans lequel ce mélange est chauffé à la température de la réaction, puis refroidi, ensuite le prépolymère est versé dans une cuve de mélange et les silsesquioxanes oligomériques polyédriques (POSS) y sont ajoutés.

6. Conformément à la revendication 5, le procédé se **caractérise par le fait que** le verre trempé est d'une épaisseur approximative de 10 mm, les joints en PVC d'une épaisseur approximative de 19 mm, que les joints sont induits à environ 30 mm du bord, que l'épaisseur des fibres individuellement est de 0,7 mm avec une tolérance de ± 0,07 mm, que le poids de l'enchevêtrement est de 300 g/m2 avec une tolérance de ± 20g/m2, que deux monofilaments de fibres de polyamide incolores pré-tendus et parallèles d'une épaisseur de 1,5 mm avec une tolérance de ± 0,15 mm, sont accrochées à la vitre supérieure à 30 mm avec une tolérance de ± 3 mm, de distance, que le mélange de monomères méthacrylate de méthyle (MMA), d'acrylate d'éthyle (EA) et des initiateurs azoïques est chauffé à 93°C ; le prépolymère refroidi est ensuite versé dans une cuve de mélange et tout en remuant constamment nous ajoutons à cela 8,5% de silsesquioxanes oligomériques polyédriques (POSS), des azoïques ou des initiateurs d'oxydoréduction ; une fois le mélange bien effectué, il est versé dans les moules préparés, ouverts sur un côté, qui sont placés dans un bassin d'eau à 54°C pendant environ 10 heures ; les moules sont ensuite transférés dans un four à air, où la post-polymérisation est réalisée pendant environ 3 heures ; après la réaction, les moules sont refroidis.

7. Un panneau renforcé par des fibres acryliques, spécialement conçu pour l'isolation acoustique, se **caractérise par le fait que** les nanoparticules de silsesquioxane oligomère polyédrique (POSS) sont intégrées à la matrice PMMA avant la polymérisation.

8. Conformément à la revendication 7, le panneau se **caractérise par le fait que** des fils monofilament, de préférence en polyamide ou en polypropylène, sont intégrés à la matrice PMMA.

9. Conformément aux revendications 7 et 8, le panneau se **caractérise par le fait que** les fils sont essentiellement parallèles entre eux et s'étendent dans une seule direction.

10. Conformément à l'une quelconque des revendications 7 à 9, le panneau se **caractérise par le fait que** les fils sont parallèles les uns par rapport aux autres dans au moins deux directions.

11. Conformément à l'une quelconque des revendications 7 à 10, le panneau se **caractérise par le fait que** les fils se croisent dans le même plan ou dans des plans différents.

12. Conformément à l'une quelconque des revendications 7 à 11, le panneau se **caractérise par le fait que** le diamètre des fils se situe entre 0.2 et 2.0 mm et que la distance entre des fils adjacents peut varier entre 8 et 10 mm.

13. Conformément à l'une quelconque des revendications 7 à 12, le panneau se **caractérise par le fait qu'**un agencement sinueux des fils est visible dans la section transversale, où les fils sont disposés de façon essentiellement parallèle et plane.

14. Conformément à l'une quelconque des revendication 7 à 13, le panneau se **caractérise par le fait que** des monofilament de fibres de polymère entrelacés de manière tridimensionnelle sont inclus à la matrice de PMMA, où les fibres renforcées par des monofilaments de polymère sont incluses dans la matrice de polyméthacrylate de méthyle de telle sorte que les fibres incluses sont orientées dans toutes les directions et agencées pour sembler être les mêmes dans toutes les directions de sorte qu'elles semblent être réparties de manière égale sur toute la section transversale du panneau ou sur tout son volume.

15. Conformément à l'une quelconque des revendications 7 à 14, le panneau se **caractérise par le fait que** des bandes sont utilisées à la place des fils.
